# FASCICULE DE BREVET EUROPEEN

(11) **EP 4 522 310 B1**
(45) Date de publication et mention de la délivrance du brevet: **18.02.2026**
(21) Numéro de dépôt: 22732598.2
(22) Date de dépôt: 12.05.2022
(51) Int. Cl.: B63H 21/32, B01D 53/14, F17C 13/00, F17C 7/04, F17C 9/04, F01N 3/02, F01N 3/08, F01N 5/02, B63B 73/10, B63B 83/40, B01D 53/78, B01D 53/62

(54) **SYSTÈME DE CAPTAGE DE CO2**
CO2-ERFASSUNGSSYSTEM
CO2 CAPTURE SYSTEM

(43) Date de publication de la demande: 19.03.2025
(73) Titulaire: TotalEnergies OneTech, 92400 Courbevoie (FR)
(72) Inventeur: PACTAT, Alexandre, 64018 Pau Cedex (FR); MARIAC, Laurent, 64000 Pau (FR); PUGNET, Véronique, 64018 Pau Cedex (FR); DINANT, Frédéric, 64018 Pau Cedex (FR); LE DUFF, Guy, 64018 Pau Cedex (FR); DE BEAUFORT, Philippe, 64018 Pau Cedex (FR)
(74) Mandataire: A.P.I. Conseil
(86) Numéro de dépôt international: PCT/FR2022/050911
(87) Numéro de publication internationale: WO 2023/218134

(56) Documents cités:
- WO-A1-2021/151443
- FR-A1- 3 030 295
- FR-A1- 3 075 064
- ROUSSANALY S. ET AL: "Offshore power generation with carbon capture and storage to decarbonise mainland electricity and offshore oil and gas installations: A techno-economic analysis", APPLIED ENERGY., vol. 233-234, 1 January 2019 (2019-01-01), GB, pages 478 - 494, XP093026195, ISSN: 0306-2619, DOI: 10.1016/j.apenergy.2018.10.020
- ROS JASPER A ET AL: "Advancements in ship-based carbon capture technology on board of LNG-fuelled ships", INTERNATIONAL JOURNAL OF GREENHOUSE GAS CONTROL, ELSEVIER, AMSTERDAM, NL, vol. 114, 8 January 2022 (2022-01-08), XP086965622, ISSN: 1750-5836, [retrieved on 20220108], DOI: 10.1016/J.IJGGC.2021.103575
- VAN DEN AKKER J T: "CARBON CAPTURE ONBOARD LNG-FUELED VESSELS A FEASIBILITY STUDY", 2 October 2017 (2017-10-02), pages 1 - 69, XP093027469, Retrieved from the Internet <URL:http://repository.tudelft.nl> [retrieved on 20230227]
- MCKENNEY THOMAS ET AL: "THE ROLE OF ONBOARD CARBON CAPTURE IN MARITIME DECARBONIZATION -", 30 September 2022 (2022-09-30), pages 1 - 15, XP093026203, Retrieved from the Internet <URL:https://www.zerocarbonshipping.com/publications/the-role-of-onboard-carbon-capture-in-maritime-decarbonization/> [retrieved on 20230227]

## Description

### Domaine technique

L'invention concerne le domaine de la réduction d'émission des gaz à effet de serre et en particulier du captage de CO₂. En particulier, l'invention concerne un système de captage de CO₂.

### Technique antérieure

Ci-après, nous décrivons l'art antérieur connu à partir duquel l'invention a été développée.

Le dioxyde de carbone (CO₂) est considéré comme responsable de 81 % des émissions de gaz à effet de serre ou « GES » en Europe selon les données publiées par le Commissariat Général au Développement Durable du gouvernement français dans « Chiffres clés du climat France, Europe et Monde » édition 2022. Principal gaz à effet de serre, et responsable en partie du réchauffement climatique, le dioxyde de carbone est par exemple rejeté au travers d'effluents gazeux, tels que des effluents gazeux industriels, notamment lorsque des combustibles fossiles sont brulés pour fournir de l'électricité et de la chaleur. Ces processus industriels incluent, par exemple, les installations de production d'énergie à partir d'énergie fossile, les installations de traitement du gaz naturel, les raffineries, les usines de production pétrochimique, les cimenteries et les usines de production d'hydrogène à base de combustibles fossiles. Le méthane est un autre gaz à effet de serre également rejeté par plusieurs de ces processus industriels et présentant un pouvoir de réchauffement global presque 30 fois supérieur à celui du CO₂. L'augmentation de la concentration atmosphérique de GES par les émissions anthropogéniques accroit l'émission d'énergie vers le sol, entrainant un déséquilibre du bilan énergétique de la Terre et provoquant l'élévation de sa température en surface. Ainsi, la prévention de l'émission de GES tels que le CO₂ ou le méthane est un enjeu sociétal essentiel.

Les installations pétrolières et/ou gazières offshore et/ou onshore font partie des processus industriels émettant des gaz à effet de serre. En effet, en fonctionnement, ces installations peuvent émettre du méthane et/ou générer du dioxyde de carbone (CO₂) notamment lors d'activités liées à l'exploitation d'hydrocarbures.

Plusieurs voies ont été explorées pour réduire les émissions de CO₂ telles qu'une utilisation plus efficace de l'énergie, privilégier l'utilisation de carburants et de sources d'énergie de remplacement et le captage et la séquestration du carbone (CSC). Parmi les technologies de captage du CO₂ développées, il est possible de citer le captage post-combustion, le captage précombustion, le captage suite à une combustion oxy-combustible et le captage suite à une combustion en boucle chimique. Diverses technologies de séparation du dioxyde de carbone peuvent être utilisées avec ces options, telles que l'absorption chimique, l'absorption physique, l'adsorption et la séparation membranaire. Parmi celles-ci, la technologie d'absorption chimique a fait l'objet du plus grand nombre de développements et de mises en œuvre en faisant ainsi une solution de choix pour le captage de CO₂ (FR3075064A1, FR3030295A1, WO2021/151443A1, S. Roussanaly et al. Applied Energy, vol. 233-234, 1 janvier 2019, 478-494, Jasper et al. international journal of greenhouse gas control, vol. 114, 8 janvier 2022, Van Den Akker 2 octobre 2017 "carbon capture onboard LNG-fueled vessels, a feasibility study" http://repository.tudelft.nl).

Néanmoins, toutes les technologies ne sont pas adaptées à une mise en œuvre sur des installations offshore et/ou onshore et notamment sur des installations pétrolières et/ou gazières et les particularités de ces installations doivent être prises en compte lors de la conception d'un système de capture de GES. Une installation qu'elle soit en mer (offshore en terminologie anglosaxonne) ou à terre (onshore en terminologie anglo-saxonne) fixe, mobile ou flottante, supporte généralement une pluralité d'équipements nécessaires à la réalisation de l'activité de l'installation. Une installation peut par exemple être conçue pour le forage, la production de fluide, le pompage, le stockage et/ou le transport.

Généralement, ces installations comprennent deux parties, une première partie en surface (topside en terminologie anglo-saxonne) qui comprend les équipements nécessaires à la réalisation de l'activité de l'installation et une deuxième partie dite porteuse qui soutient l'installation (en mer ou à terre) et qui peut également participer à l'activité de l'installation en particulier dans le cas de plateforme de stockage où cette partie porteuse comprend des capacités de stockage.

Afin de capter et/ou traiter et/ou stocker ces gaz et plus particulièrement le CO₂, il est généralement nécessaire de modifier l'installation existante et/ou d'ériger au moins une structure additionnelle sur laquelle est déployée l'installation de captage et de traitement de gaz/CO₂, issus par exemple des fumées produites par des installations de génération de puissance pouvant être mécanique et/ou électrique et/ou thermique. Néanmoins, cette solution est fastidieuse, longue et couteuse et, selon le lieu d'implantation de l'installation, pas toujours réalisable. Par ailleurs, cette solution requiert un grand nombre de matériaux nécessaires d'une part à la construction de l'installation, son déploiement, son raccord et/ou l'exécution de son activité. Ceci en fait une solution particulièrement couteuse. En outre, la dimension et le poids important de ces équipements ont un impact direct sur la conception et le cout de la structure support fixe, mobile ou flottante ce qui constitue un frein à la mise en œuvre d'installation annexe.

Il a alors été proposé la construction d'équipements dédiés au captage et au traitement de gaz/CO₂ comme par exemple une colonne de refroidissement, d'absorption, de régénération et de nombreuses canalisations sur des installations existantes. Cependant, ces équipements nécessitent une hauteur et un espace importants pour être associés à une installation existante et doivent être installés en surface ou logés à proximité des fumées générées par l'activité de l'installation. À nouveau, en fonction du lieu d'implantation de l'installation et des contraintes que l'installation peut subir, de telles constructions peuvent s'avérer trop couteuses, difficiles à mettre en œuvre ou tout simplement non constructibles. En effet, en fonction de l'activité de l'installation et de son lieu d'implantation, sa conception doit répondre à de nombreuses contraintes (par exemple la houle, les profondeurs, le risque sismique...). Ce qui accentue la difficulté de modification d'une installation existante.

Par ailleurs une installation présente généralement une durée de vie dite longue entre 20 et 30 ans, ce qui implique que celle-ci est difficilement modifiable et/ou remplaçable. En outre, la construction originelle de l'installation n'est pas nécessairement prévue pour accueillir d'autres équipements que ceux prévus à la réalisation de son activité, ni à ce que son activité soit couplée à une deuxième plateforme.

Ainsi, il a été proposé dans l'article scientifique intitulé « Offshore power generation with carbon capture and storage to decarbonise mainland electricity and offshore oil and gas installations : A techno-economic analysis» (Roussanaly et al-Applied Energy, 2019 ) une nouvelle conception de plateforme comprenant par exemple une centrale électrique et des turbines à gaz sur la partie en surface de la plateforme. Les éléments de captages de CO₂ sont disposés au centre d'une deuxième partie sous les turbines à gaz et, en profondeur, un espace dédié à des éléments lourds est aménagé afin de stabiliser la plateforme. Le reste de la deuxième partie est alors laissé vide et inoccupé. Les dimensions et le poids importants de ces équipements ainsi que leur constitution généralement en acier engendre des couts très élevés en plus de la perte d'espace.

Aujourd'hui, les installations ne sont pas conçues pour minimiser les couts de construction et/ou de production et/ou d'installation d'un système de captage de CO₂. Ainsi, il existe un besoin pour des solutions permettant de s'affranchir de construction couteuse ou d'équipements imposants et couteux. De même, il devient important de bénéficier de nouvelles solutions pouvant être facilement et rapidement déployables. En outre, devant l'urgence climatique, il est primordial de pouvoir réduire les émissions de CO₂.

L'invention a pour but de remédier aux inconvénients de l'art antérieur. En particulier, l'invention a pour but de proposer un système de captage de CO₂, ledit système étant adapté à tout type d'installation, quelle que soit son activité, et permettant de réduire les émissions de CO₂ ainsi que les couts, et qui soit en outre facilement et rapidement déployables notamment, dans le cadre d'installation existante ou dans le cadre d'implantation d'une nouvelle installation.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention vise en particulier un système de captage de CO₂ à partir de fumées comportant au moins un module de refroidissement, au moins un module d'absorption, et au moins un module de régénération de solvant, chacun desdits modules étant agencé de façon à définir un volume interne ;
le volume interne du module de refroidissement est agencé pour permettre un refroidissement de fumées comportant du CO₂ avec un fluide, de façon à refroidir les fumées ;
le volume interne du module d'absorption est agencé pour permettre une mise en contact des fumées refroidies avec un solvant pauvre capable d'absorber le CO₂ des fumées pour générer un solvant enrichi ;
le volume interne du module de régénération du solvant est agencé pour permettre le traitement du solvant enrichi de façon à libérer le CO₂ absorbé et former un solvant pauvre ;
ledit système comportant en outre au moins une conduite de transport de fumées agencée pour permettre le transport de fumées vers le module de refroidissement, ledit système étant caractérisé en ce que :
   - il comporte une structure marine, ladite structure marine comportant une coque et au moins une cloison de compartimentage,
   - le volume interne d'au moins un des modules est au moins en partie défini par la coque et/ou l'au moins une cloison de compartimentage.

La demanderesse a développé un système capable de réduire les émissions de CO₂ de n'importe quel type d'installation présentant une réduction de la durée et du cout de construction ou de déploiement.

En effet, grâce au système développé par la demanderesse, la structure marine est totalement optimisée et permet d'intégrer tout ou partie d'une installation de captage de CO₂ par absorption.

Grâce à l'invention, des unités, canalisations et autres équipements constituant le système captage de CO₂ se retrouve directement intégré dans la structure marine et compartimenté directement grâce à la structure marine ce qui optimise grandement l'espace inoccupé et permet une réduction des matériaux utilisés et donc une réduction des couts.

En outre, le système de captage de CO₂ selon l'invention permet de respecter l'activité des installations sans perturber leur fonctionnement, leur activité ou leurs paramètres comme par exemple la flottabilité ou encore leur lieu d'implantation.

En outre, un tel système selon l'invention est particulièrement robuste et peut être rapidement déployé.

Selon d'autres caractéristiques optionnelles du système, ce dernier peut inclure facultativement une ou plusieurs des caractéristiques suivantes, seules ou l'une quelconque de leurs combinaisons :
- l'au moins une conduite de transport de fumée est formée au moins en partie par la coque et/ou l'au moins une cloison de compartimentage,
- l'au moins une cloison de compartimentage correspond à au moins une cloison transversale, au moins une cloison transversale partielle, à au moins une cloison longitudinale et/ou à au moins une cloison longitudinale partielle reliant la coque,
- la coque correspond à une simple coque,
- la coque comprend au moins un bordé de muraille et/ou au moins un bordé de fond,
- la coque correspond à une double coque,
- la coque comprend au moins un bordé de muraille, au moins un bordé de fond, au moins cloison transversale de double coque, au moins une cloison longitudinale de double coque et/ou une paroi de double fond,
- l'au moins une conduite de transport de fumées est commune avec la coque sur au moins 0.05% de la surface de la coque,
- l'au moins une conduite de transport de fumées est commune avec la coque sur au plus 10% de la surface de la coque,
- le volume interne de chacun des modules est au moins en partie défini par la coque,
- l'au moins une conduite de transport de fumées est commune avec l'au moins une cloison de compartimentage sur au moins 5 % de la surface de l'au moins une cloison de compartimentage,
- la coque est formée au moins en partie par l'au moins une cloison de compartimentage,
- le volume interne de chaque module est au moins en partie défini par l'au moins une cloison de compartimentage,
- le volume interne d'au moins un des modules est au moins en partie défini par l'au moins une conduite de transport de fumées,
- le volume interne de chaque module est au moins en partie défini par l'au moins une conduite de transport de fumées,
- il comprend en outre au moins une unité de génération de fumées agencée pour générer des fumées à partir d'hydrocarbures,
- l'unité de génération de fumées est agencée pour injecter les fumées dans l'au moins une conduite de transport de fumées,
- l'au moins une unité de génération de fumées correspond à une unité de génération de puissance électrique et/ou mécanique et/ou thermique,
- l'unité de génération de fumées est configurée pour permettre un cycle combiné,
- l'unité de génération de fumées comporte un système de recirculation d'une partie des fumées,
- l'unité de génération de fumées comporte un système de recirculation sélective d'une partie des fumées,
- le module d'absorption est formé par au moins une colonne partageant une paroi commune avec la coque,
- le module d'absorption est formé par au moins deux colonnes, chacune partageant une paroi commune avec la coque,
- le module d'absorption est agencé pour permettre une absorption de type flux croisé,
- le module d'absorption est agencé pour permettre une absorption de type contrecourant,
- il comprend en outre au moins un module de lavage,
- lorsque le module d'absorption est agencé pour permettre une absorption de type flux croisé, le système de captage de CO₂ comprend au moins un volume interne du module d'absorption et au moins un volume interne du module de lavage,
- le module d'absorption agencé pour permettre une absorption de type flux croisé comprend au moins un volume interne du module d'absorption et au moins un volume interne du module de lavage au sein d'un même module d'absorption,
- le module d'absorption agencé pour permettre une absorption de type flux croisé peut comporter au moins un étage d'absorption ou une pluralité d'étages d'absorption, chaque étage pouvant être délimité par des cloisons partielles,
- il est agencé de façon à permettre un flux de fluide horizontal et/ou vertical et/ou radial,
- la coque est recouverte par un revêtement, de préférence un revêtement polymère,
- la coque est en béton ou en acier,
- il est fixe ou flottant,
- il est partiellement immergé,
- il comprend en outre au moins un module de stockage de solvant,
- au moins une partie du module de refroidissement est en contact direct ou indirect avec le fluide,
- au moins une partie du module de refroidissement est en contact avec une boucle indirecte de refroidissement.

Selon un deuxième objet, l'invention porte sur l'utilisation d'un système de captage de CO₂ selon l'invention dans la production d'électricité, dans la production de vapeur, dans le traitement du CO₂, dans le conditionnement du CO2, dans le transport du CO₂, dans le stockage du CO₂, dans la récupération de fumées d'échappement, dans le traitement de fumées d'échappement, dans la production de gaz, dans la production de pétrole et/ou dans le transport maritime. De préférence, l'invention porte sur l'utilisation d'un système de captage de CO₂ dans la production de gaz naturel, c'est à dire le gaz naturel qui peut également être liquéfié mais également du gaz de synthèse (issu par exemple de la gazéification du charbon) ou encore mais de façon moins préférée du biogaz issu de méthanisation de biomasse.

Ainsi l'utilisation d'un tel système permet de réduire les émissions de CO₂, d'optimiser les couts tout en étant rapidement déployable et compatible avec plusieurs installations et activités de plateforme qui génèrent des émissions de CO₂.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un schéma d'un mode de réalisation d'un système de captage de CO₂ selon l'invention.
[Fig. 2] La figure 2 représente un schéma d'un mode de réalisation d'un système de captage de CO₂ selon l'invention.
[Fig. 3] La figure 3 représente un schéma d'un mode de réalisation d'un système de captage de CO₂ selon l'invention.
[Fig. 4] La figure 4 représente un schéma d'un mode de réalisation d'un système de captage de CO₂ selon l'invention.
[Fig.5] La figure 5 représente un schéma d'un mode de réalisation d'une simple coque.
[Fig.6] La figure 6 représente un schéma d'un mode de réalisation d'une double coque.

Les figures ne respectent pas nécessairement les échelles, notamment en épaisseur, et ce à des fins d'illustration.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Dans la suite de la description, l'expression « structure marine » peut correspondre à une structure, fixe ou flottante et pouvant également être mobile ou non. Une structure marine peut être en mer, proche du littoral ou côtière ou encore d'un point d'eau tel qu'un lac. Une structure marine peut correspondre à une installation off-shore.

L'expression « **installation** offshore » peut correspondre, au sens de l'invention, à des structures fixes ou flottantes de type plateformes ou barges ou gravitaires. Par structure il peut s'agir de plateforme.

Le terme « **coque** » peut correspondre, au sens de l'invention, à une enveloppe délimitant la partie extérieure d'une structure marine.

L'expression « **cloison de compartimentage** », au sens de l'invention, peut correspondre à une paroi ou une séparation qui traverse de part en part la structure marine par exemple de haut en bas, de gauche à droite (ou de droite à gauche) ou encore dans le diamètre ou le rayon. Une cloison de compartimentage peut être transverse ou longitudinale par exemple. En outre, une cloison de compartimentage peut être d'un seul tenant, c'est-à-dire ininterrompue ou continue, ou être discontinue, c'est-à-dire qu'elle peut présenter un ensemble de parois séparées les unes des autres de préférence le long d'un même axe. Une cloison de compartimentage peut être totale ou partielle.

L'expression « **partiellement immergé** », au sens de l'invention, peut correspondre à une immersion en partie. Ladite partie pouvant être plus ou moins volumineuse sans pour autant représenter une totalité.

L'expression **« au moins en partie** » peut correspondre au sens de l'invention à l'expression de façon incomplète ou partielle ou une totalité. L'expression peut représenter une totalité ou une partie d'une totalité. Il peut par exemple s'agir de deux éléments qui concourent à un ensemble commun. Par exemple, un premier élément formé en partie par un second élément, le premier et le second élément présentant au moins un élément, une surface, un volume en commun.

L'expression « **contact direct** » au sens de l'invention peut correspondre à un contact sans intermédiaire entre deux éléments.

L'expression « **contact indirect** » au sens de l'invention peut correspondre à un contact entre deux éléments au travers d'un ou plusieurs éléments intermédiaires.

L'expression « **être commun** » au sens de l'invention peut correspondre à au moins deux éléments habituellement distincts qui sont alors réunis ou qui ne font qu'un. Par exemple un volume peut être commun avec une surface et/ou une cloison et/ou une conduite, cela peut correspondre au fait que la surface et/ou la cloison et/ou la conduite participe(nt) à la délimitation du volume.

Le terme « **conduite** » au sens de l'invention peut correspondre à un conduit, un canal, une canalisation permettant l'écoulement d'un fluide (liquide ou gaz), et/ou l'acheminement d'un fluide.

Le terme « **défini** » ou « **formé** » au sens de l'invention peut correspondre par exemple à constituer, participer à la constitution de quelque chose. Par exemple, un volume peut être défini par une paroi ainsi la paroi participe à la formation et à la délimitation du volume interne. De même par exemple, une cloison peut être formée par une paroi, ainsi la paroi participe à la formation et à la délimitation de la cloison.

Le terme « **compartiment** » peut être compris au sens de l'invention comme une cale sèche ou de ballastage voir de stockage.

Dans la suite de la description lorsque des gammes ou des fourchettes sont utilisées, les bornes sont incluses.

L'invention propose de prendre en considération les émissions de CO₂ ainsi que les couts liés à la construction et au déploiement de structures additionnelles ou à la modification de structures existantes ou encore à l'intégration de système de captage de CO₂ nécessitant l'utilisation de nombreux équipements et matériaux. En particulier, l'invention propose d'optimiser les structures sans affecter les contraintes liées au lieu d'implantation et à la réalisation de leur activité tout en minimisant les travaux nécessaires et l'utilisation de matériaux encombrant et couteux. Pour cela, l'invention propose de modifier l'agencement des structures et notamment leur cloisonnement tout en proposant une réduction des émissions de CO₂.

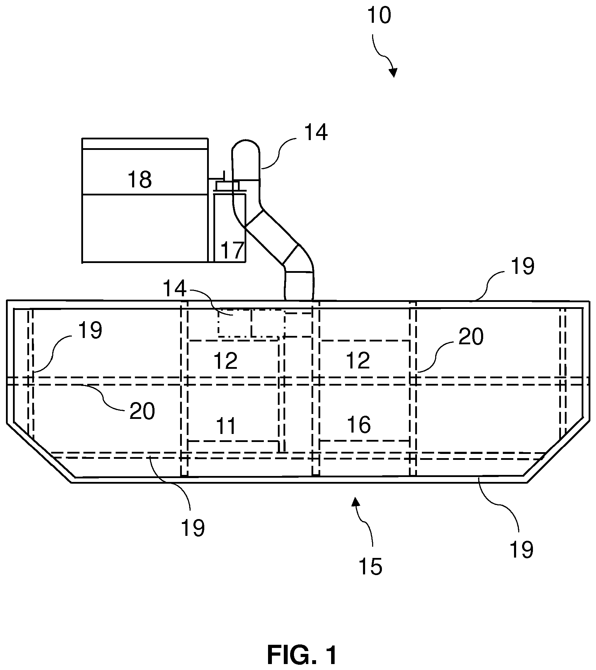

Ainsi, l'invention concerne un système de captage de CO₂ à partir de fumées. Un système de captage de CO₂ peut être illustré dans des exemples des figures 1 à 4.

Un système 10 de captage de CO₂ selon l'invention peut comprendre au moins un module de refroidissement 11, au moins un module d'absorption 12, et au moins un module de régénération de solvant 13, au moins une conduite de transport de fumée 14, au moins une structure marine 15.

Les fumées peuvent par exemple être produites par une ou plusieurs unités 18 de génération de fumées. Une unité 18 de génération de fumées peut par exemple être une unité de génération de puissance électrique, mécanique et/ou thermique (pouvant notamment comprendre la puissance vapeur), de type turbine et/ou de type moteur et/ou de type chaudière ou encore liées à l'activité par exemple de production de pétrole et/ou de gaz. Ces unités 18 peuvent être couplées à un ou plusieurs récupérateurs de chaleur 17. Ces fumées sont généralement chargées en CO₂, mais comprennent également d'autres composants de type azote, oxygène, eau, argon, oxyde de soufre, oxyde d'azote. Aussi le CO₂ est très dilué, par exemple sur un volume de fumée, le CO₂ peut ne représenter que 3 % à 9 % sans recirculation des fumées et jusqu'à 20% avec recirculation des fumées. La récupération d'un volume significatif de CO₂ nécessite donc la gestion et le traitement de très grands volumes de fumées. Il est donc difficile de pouvoir récupérer ce CO₂.

Ainsi un système 10 de captage de CO₂ selon un mode de réalisation de l'invention peut comprendre une turbine à gaz agencée pour générer de l'électricité et des fumées à partir d'hydrocarbure ; de sorte que les fumées sont injectées dans l'au moins une conduite de transport de fumées 14. Par exemple, l'au moins une conduite de transport de fumée peut être en contact direct ou indirect avec une cheminée d'une unité de génération de fumées. Optionnellement, une turbine à gaz peut être configurée pour permettre un cycle combiné de type CCGT pour Combined Cycle Gas Turbine en terminologie anglo-saxonne. Ainsi, une turbine à gaz peut également être couplée avec une unité de récupération de chaleur et/ou de génération de vapeur. Ceci permet en outre d'augmenter les rendements de production d'électricité et/ou de vapeur.

Optionnellement, une turbine à gaz peut comprendre une conduite de recirculation des fumées agencée à l'entrée de la turbine à gaz, de préférence depuis un module de refroidissement 11 vers l'entrée d'air de la turbine. Il peut par exemple s'agir d'une turbine équipée d'un dispositif de type EGR pour Exhaust Gas Recirculation en terminologie anglo-saxonne ou encore d'une recirculation sélective du type SEGR pour Selective Exhaust Gas Recirculation en terminologie anglo-saxonne.

Par ailleurs, dans un mode de réalisation alternatif ou complémentaire, les fumées peuvent par exemple être générées ou produites par un ou plusieurs moteur(s), de préférence de moteur(s) de navire. Les fumées d'échappement produites ou générées peuvent alors être injectées dans l'au moins une conduite de transport de fumées.

Les fumées produites sont par la suite acheminées vers différents modules par l'au moins une conduite de transport de fumées 14 afin de pouvoir traiter les gaz d'intérêt et permettre le captage de CO₂.

L'au moins une conduite de transport de fumées 14 permet donc le transport des fumées chargées en gaz/CO₂, et de préférence d'acheminer les fumées vers au moins un module du système 10 de captage de CO₂ et de préférence vers le module de refroidissement 11.

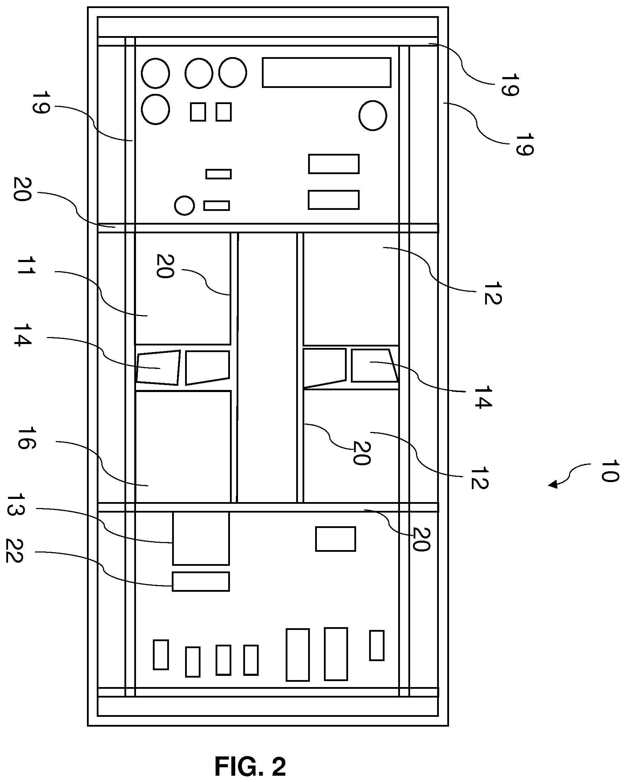

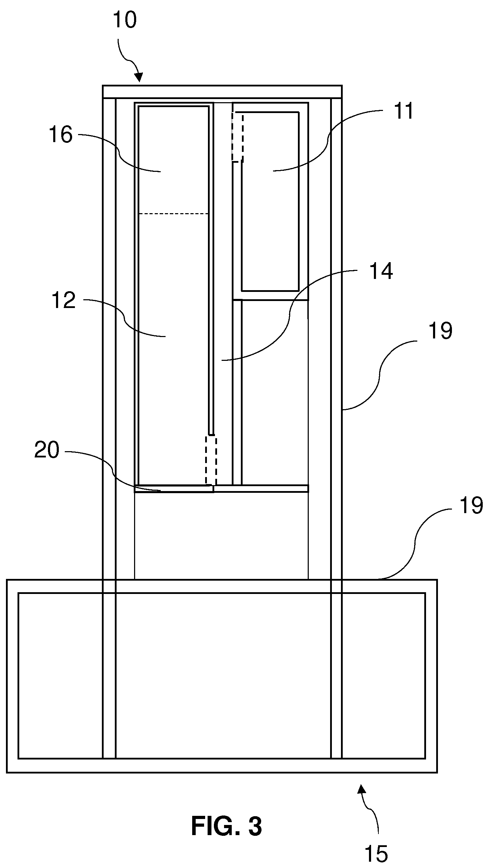

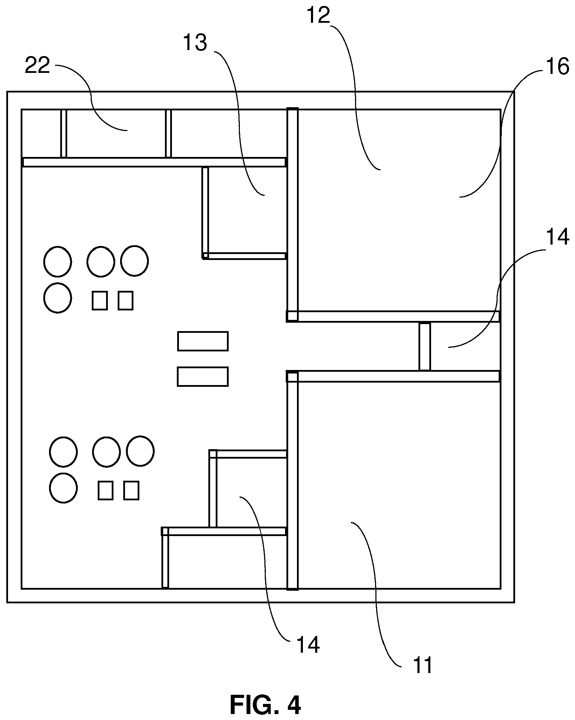

Dans l'exemple de la figure 1 ou de la figure 2 ou de la figure 3 ou encore de la figure 4, le système 10 de captage de CO₂ à partir de fumées comporte au moins un module de refroidissement 11, au moins un module d'absorption 12 et au moins un module de régénération de solvant 13. Le système 10 de captage de CO₂ selon l'invention peut également comprendre au moins un module de lavage 16, au moins un module de stockage de solvant 22. Chaque module est de préférence agencé pour définir un volume interne. De préférence, le volume interne correspond à un volume dans lequel se déroule les actions nécessaires à la destination du module. Par exemple, de façon préférée, le volume interne d'un module de refroidissement correspond au volume dans lequel les fumées comportant du CO₂ seront mises en contact avec un fluide.

Le volume interne du module de refroidissement 11 est agencé pour permettre un refroidissement de fumées comportant du CO₂ avec un fluide. Un refroidissement peut par exemple correspondre à une mise en contact entre les fumées et le fluide. Une mise en contact peut être par contact direct ou par contact indirect. Par ailleurs, un tel fluide peut par exemple correspondre à de l'eau. Il peut par exemple s'agir d'eau de mer ou alternativement d'eau déminéralisée. Par exemple, dans un mode de réalisation non limitatif de l'invention, le module de refroidissement peut être en contact avec une boucle indirecte de refroidissement. Les fumées sont alors mises en contact avec de l'eau déminéralisée qui est refroidie grâce à une boucle de refroidissement chargée en eau de mer couplée à au moins un récupérateur de chaleur. Alternativement, un module de refroidissement peut être couplé à une boucle directe de refroidissement. Alternativement, les fumées peuvent être en contact direct avec de l'eau. Ceci permet de refroidir les fumées. Avantageusement, le module de refroidissement peut également permettre un abattement au moins partiel de la concentration d'autres composés présents dans les fumées, notamment les oxydes de soufre et d'azote.

Le volume interne du module d'absorption 12 est agencé pour permettre une mise en contact des fumées refroidies avec un solvant pauvre capable d'absorber le CO₂ des fumées pour générer un solvant enrichi. A titre d'exemple un solvant peut par exemple correspondre à un solvant à base amine.

Le volume interne du module de régénération du solvant 13 est agencé pour permettre le traitement du solvant enrichi de façon à libérer le CO₂ absorbé et former un solvant pauvre.

Le volume interne du module de lavage 16 est agencé pour permettre une mise en contact des fumées appauvries en CO₂ avec de l'eau, de préférence de l'eau déminéralisée, afin d'abattre les éventuels entrainements de solvant présents dans les fumées.

Le volume interne du module de stockage 22 est agencé pour permettre un stockage de solvant.

Avantageusement, un module peut comprendre un ou plusieurs volumes internes ou au moins deux modules peuvent présenter un même volume interne. Dans ces modes de réalisation, le(s) volume(s) interne(s) correspond(ent) à un volume dans lequel se déroulent les actions nécessaires à la destination du ou des module(s). Par exemple, le volume interne du module de lavage 16 et le volume interne du module d'absorption 11 peuvent être réunis au sein d'un même volume.

Avantageusement, le système 10 de captage de CO₂ selon l'invention comporte des canalisations de transport du solvant agencées pour permettre le transport du solvant enrichi du module d'absorption 11 au module de régénération du solvant 13 ou du solvant pauvre du module de régénération du solvant 13 au module d'absorption 11. Ces canalisations de transport de solvant qu'il soit enrichi ou pauvre peuvent être de type connu en soi par l'homme du métier telles que des tuyauteries classiques dans le domaine.

Le CO₂ peut alors être extrait en parallèle de n'importe quelle activité (électrique, mécanique, thermique, stockage, gazier et/ou pétrolier). Ainsi, le CO₂ capté peut être réinjecté dans les sols d'où il provient ce qui réduit les émissions de CO₂ en le séquestrant. Le CO₂ peut également être temporairement stocké, de préférence sous forme liquide, pour une utilisation ultérieure ce qui permet également de réduire les émissions de CO₂. Ceci est particulièrement avantageux, car le CO₂ est capté ce qui permet d'une part de réduire les émissions de CO₂ et d'autre part d'être complémentaire de n'importe quelle activité.

Avantageusement, le système 10 de captage de CO₂ selon l'invention comporte une structure marine 15. Une structure marine 15 peut être illustrée en lien avec les figures. En outre, le système 10 de captage de CO₂ selon l'invention peut être fixe ou flottant, de préférence flottant. Ainsi, une structure marine 15 peut correspondre à une barge, une structure gravitaire en béton GBS (pour Gravity Based Structure en terminologie anglo-saxonne) ou une structure gravitaire en béton CBS ( pour Concrete Based Structure en terminologie anglo-saxonne), ou une structure gravitaire en béton CGBS (pour Concrete Gravity Based Structure en terminologie anglosaxonne) ou une structure gravitaire en acier SGBS (pour Steel Gravity Based Structure en terminologie anglo-saxonne) une structure gravitaire en acier SGS (pour Steel Gravity Structure en terminologie anglo-saxonne). Une structure marine 15 peut correspondre par exemple à une unité flottante de production de stockage et de déchargement FPSO (pour Floating Production Storage and Offloading en terminologie anglo-saxonne), une unité flottante de production FPU (pour Floating Production Unit en terminologie anglo-saxone), une unité flottante de gaz naturel liquéfié FLNG (pour Floating Liquefied Natural Gas en terminologie anglo-saxonne), une unité flottante de stockage et de déchargement FSO (pour Floating Storage and Offloading en terminologie anglo-saxonne), une unité flottante de production d'électricité FPGU (pour Floating Power Generation Unit en terminologie anglo-saxonne), une unité flottante de stockage et de regazéification du gaz naturel liquéfié FSRU (pour Floating Storage and Regasification Unit en terminologie anglo-saxonne), une unité flottante de stockage et de regazéification du gaz naturel liquéfié avec génération de puissance FSRP (pour Floating Storage Regasification and Power generation barge en terminologie anglo-saxonne), ou toute autre unité flottante de type semisubmersible, une structure flottante pour grande profondeur SPAR (pour Single Point Anchor Reservoir en terminologie anglo-saxonne) ou TLP ( pour Tension Leg Platform en terminologie anglo-saxonne) .

Une structure marine 15 peut présenter n'importe quelle géométrie. C'est-à-dire qu'une structure marine 15 n'est pas limitée par sa forme. Ainsi une structure marine 15 peut être de forme circulaire, rectangulaire ou sensiblement rectangulaire ou toute autre forme polygonale. De même et de façon particulièrement avantageuse, la structure marine 15 n'est pas limitée par sa taille. Ainsi une structure marine 15 peut présenter n'importe quelle longueur, n'importe quelle largeur, n'importe quelle hauteur, n'importe quel diamètre.

En outre, un système 10 de captage de CO₂ selon l'invention comprend une structure marine 15 qui peut être partiellement immergé. La structure marine 15 peut par exemple présenter une partie de sa structure en contact avec de l'eau de préférence de l'eau de mer. Par exemple, « partiellement immergée » peut correspondre à au moins 10 % sous le niveau de la mer, de préférence au moins 20 % et de manière plus préférée au moins 30 % de la structure en contact avec de l'eau de préférence de l'eau de mer. Cela peut également correspondre à une immersion d'au plus de 90 % sous le niveau de la mer, de préférence au plus 85 % sous le niveau de la mer et de manière plus préférée au plus 80 % sous le niveau de la mer. Ainsi par partiellement immergé cela peut correspondre à une immersion allant de 10 % à 90 % sous le niveau de la mer, de préférence de 20 % à 85 % et de manière plus préférée allant de 30 % à 85 % sous le niveau de la mer.

Dans des modes de réalisations particuliers de l'invention, chaque module peut être agencé soit en surface de la structure marine 15 soit dans la structure marine 15 soit hors de la structure marine. Par exemple, il ne sort pas du cadre de l'invention qu'un module de refroidissement 11 soit présent en surface de la structure marine 15 dans un premier mode de réalisation et/ou qu'il soit présent dans la structure marine 15 dans un autre mode de réalisation.

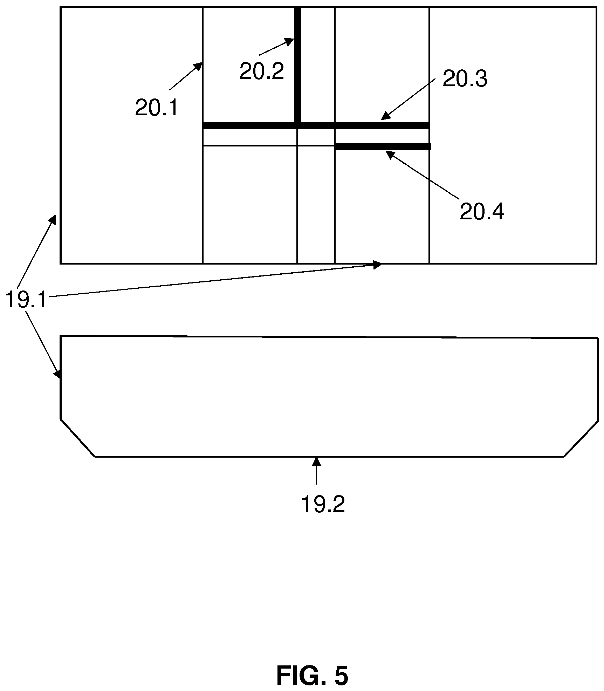

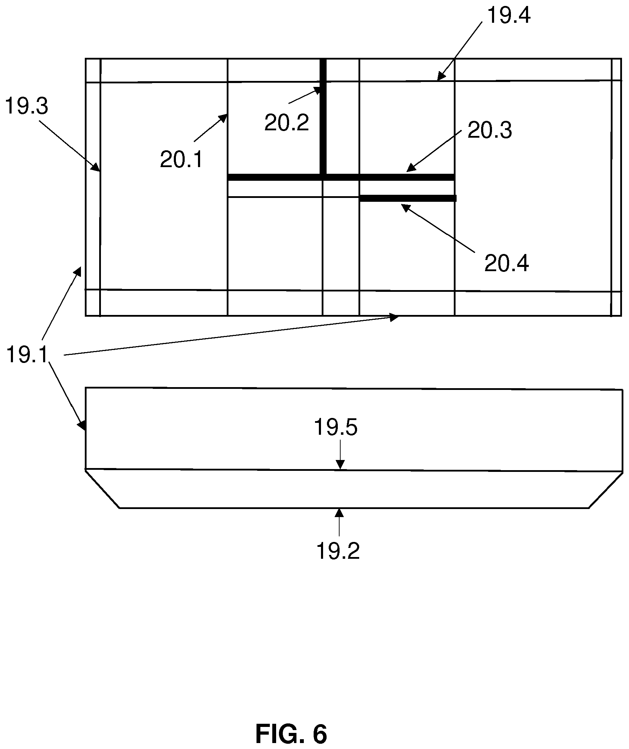

Par ailleurs, une structure marine 15 comprend une coque. Une illustration de coque peut être représentée en lien avec les figures 5 ou 6. De préférence la coque permet de délimiter la structure marine 15. Une coque peut être simple ou double. Une simple coque telle qu'illustrée en lien avec la figure 5 peut comprendre un bordé de muraille 19.1 (side shell en terminologie anglo-saxonne), un bordé de fond 19.2 (ou hull bottom ou bottom shell en terminologie anglosaxonne). Une double coque telle qu'illustrée en lien avec la figure 6 peut comprendre un bordé de muraille 19.1 (side shell en terminologie anglo-saxonne), un bordé de fond 19.2 (ou hull bottom ou bottom shell en terminologie anglo-saxonne), une cloison transversale de double coque 19.3 (transversal inner hull ou inner shell en terminologie anglo-saxonne), une cloison longitudinale de double coque 19.4 (ou longitudinal inner hull en terminologie anglo-saxonne), une paroi de double fond 19.5 (inner bottom ou inner bottom shell en terminologie anglo-saxonne). Dans un mode de réalisation particulier mais non limitatif, la coque peut être une double coque telle qu'illustrée en lien avec la figure 6. L'ensemble des bordés, des cloisons de double coque et de paroi font partie au sens de l'invention de la double coque. En outre, une coque présente une surface intérieure et une surface extérieure, la surface extérieure étant par exemple la surface pouvant être en contact avec de l'eau de mer et la surface intérieure délimitant le volume interne global de la structure marine et pouvant former un volume intérieur. Une coque 19 peut être en acier ou en béton. En outre, de façon avantageuse, une coque 19 peut comprendre un revêtement, de préférence un revêtement polymère. De préférence une coque 19 en béton peut comprendre un revêtement, de préférence un revêtement polymère.

La structure marine 15 peut comprendre au moins une cloison 20 de compartimentage.

Une cloison 20 de compartimentage peut correspondre à une paroi. Une cloison 20 de compartimentage est agencée pour être reliée à ou soutenir la coque, de préférence la surface intérieure de la coque 19, et de manière encore plus préférée, la surface intérieure de la simple ou de la double coque. Ainsi, une cloison 20 de compartimentage peut être reliée à la simple ou double coque, de préférence à la surface intérieure de la simple ou double coque 19 dans le sens de sa longueur et/ou de sa largeur et/ou de son diamètre et/ou de son rayon. Par exemple, une cloison 20 de compartimentage peut être agencée de haut en bas de la surface intérieure de la coque 19, et/ou de gauche à droite de la surface intérieure de la coque 19 et/ou dans une des diagonales de la surface intérieure de la coque 19. Une cloison 20 de compartimentage peut comprendre une surface extérieure et une surface intérieure. Une cloison 20 de compartimentage peut par exemple correspondre à une cloison transversale totale 20.1 (transverse bulkhead en terminologie anglo-saxonne), à une cloison transversale partielle 20.2 (ou partial transverse bulkhead en terminologie anglo-saxonne), à une cloison longitudinale totale 20.3 (ou longitudinal bulkhead en terminologie anglosaxonne), à une cloison longitudinale partielle 20.4 (ou partial longitudinal bulkhead en terminologie anglo-saxonne). En outre, une cloison de compartimentage 20 qu'elle soit totale ou partielle peut être continue ou discontinue. Par ailleurs, une cloison de compartimentage 20 peut être en béton ou en acier. De préférence, une cloison 20 de compartimentage peut également comprendre un revêtement, de préférence dans le cas d'une cloison 20 de compartimentage en béton.

Avantageusement, le système 10 de captage de CO₂ selon l'invention comporte également au moins une conduite de transport de fumées 14 agencée pour permettre le transport de fumées vers le module de refroidissement 11, de préférence de l'unité 18 de génération de fumées vers le module de refroidissement 11. La conduite de transport de fumées 14 peut également être agencée pour permettre le transport de fumées du module de refroidissement 11 vers le module d'absorption 12. Optionnellement, la conduite de transport de fumées 14 peut également être agencée pour permettre le transport de fumées du module d'absorption 12 vers le module de lavage 16. En effet, dans un exemple particulier et non limitatif de l'invention, comprenant un absorbeur horizontal à flux croisé, la conduite de transport de fumées 14 agencée pour permettre le transport de fumées du module d'absorption 12 vers le module de lavage 16 peut être absente.

Une conduite de transport de fumées 14 peut comprendre une surface extérieure et une surface intérieure. Une conduite de transport de fumées 14 peut être en acier ou en béton. Avantageusement, une conduite de transport de fumées 14 peut comprendre un revêtement, de préférence un revêtement polymérique, de préférence dans le cas de conduite en béton. De façon particulièrement avantageuse, une conduite de transport de fumées 14 n'est pas limitée par sa forme ou par sa taille. Une conduite de transport de fumées 14 selon l'invention peut également être couplée à au moins un souffleur afin de favoriser la progression des fumées.

De façon particulièrement avantageuse, l'au moins une conduite de transport de fumées 14 peut être formée au moins en partie par la coque 19, de préférence par la surface intérieure de la coque 19 ; et/ou par une cloison 20 de compartimentage. Par coque on entend au moins une cloison longitudinale de double coque, au moins une cloison transversale de double coque, au moins une paroi de double fond, au moins un bordé de fond et/ou au moins un bordé de muraille. Par cloison 20 de compartimentage, on entend au moins une cloison transversale totale, au moins une cloison transversale partielle, au moins une cloison longitudinale totale et/ou au moins une cloison longitudinale partielle. De préférence la surface intérieure de la coque peut participer à la formation de la surface externe de la conduite de transport de fumées. Ainsi, l'au moins une conduite de transport de fumées 14 peut être commune avec la coque 19 sur au moins 0.05 % de la surface, de préférence de la surface totale, de préférence de la surface totale de la surface intérieure, de la coque 19, de préférence au moins 0.10 % de la surface de la coque 19 de manière plus préférée au moins 0.50 % de la surface de de la coque 19 et de manière encore plus préférée au moins 1.00 % de la surface de la coque 19.

L'au moins une conduite de transport de fumées 14 peut être commune avec la coque 19 sur au plus 10.00 % de la surface, de préférence de la surface totale, de manière plus préférée de la surface totale de la surface intérieure de la coque 19, de préférence au plus 8.00 % de la surface de la coque 19 de manière plus préférée au plus 6.00 % de la surface de la coque 19 et de manière encore plus préférée au plus 5.00 % de la surface de la coque 19.

L'au moins une conduite de transport de fumées 14 peut être commune avec la surface de la coque 19, de préférence de la surface totale de la coque 19, de manière plus préférée de la surface totale de la surface intérieure de la coque 19, entre 0.05 % et 10.00 %, de préférence entre 0.01 % et 8.00 % de manière préférée entre 0.50 % et 6.00 % et de manière plus préférée entre 1.00 % et 5.00 %.

Ainsi, au moins une partie de la conduite de transport de fumées 14 et de préférence de la surface externe et/ou interne de la conduite de transport de fumées 14 peut être commune avec la surface de la coque, de préférence la surface totale, de manière préférée de la surface totale de la surface intérieure de la coque 19. Ceci est particulièrement avantageux, car cela permet d'optimiser l'espace de la structure marine. En outre, cela permet de réduire le nombre de matériaux et d'installations nécessaires au captage de CO₂. En effet, grâce à cet agencement, un gain de temps, de construction, de production et de robustesse est permis pour l'installation d'un système de captage et de traitement des gaz/CO₂ constitué d'équipements encombrant et couteux en surface.

De façon tout aussi avantageuse, l'au moins une conduite de transport de fumées 14 peut être formée au moins en partie par l'au moins une cloison 20 de compartimentage. De préférence, la surface extérieure de la conduite de transport de fumées 14 peut être formée par la surface extérieure de l'au moins une cloison 20 de compartimentage. Ainsi, l'au moins une conduite de transport de fumées 14 peut être commune avec l'au moins une cloison 20 de compartimentage sur au moins 5 % de la surface, de préférence de la surface totale, de manière préférée de la surface totale de la surface extérieure de l'au moins une cloison de compartimentage 20, de préférence au moins 10 % de la surface de l'au moins une cloison 20 de compartimentage de manière plus préférée au moins 15 % de la surface de l'au moins une cloison 20 de compartimentage et de manière encore plus préférée au moins 20% de la surface de l'au moins une cloison 20 de compartimentage.

L'au moins une conduite de transport de fumées 14 peut être commune avec l'au moins une cloison 20 de compartimentage sur au plus 99 % de la surface, de préférence de la surface totale, de manière plus préférée de la surface totale de la surface extérieure, de l'au moins une cloison 20 de compartimentage, de préférence au plus 90 % de la surface de l'au moins une cloison 20 de compartimentage de manière plus préférée au plus 85 % de la surface de l'au moins une cloison 20 de compartimentage et de manière encore plus préférée au plus 80 % de la surface l'au moins une cloison 20 de compartimentage.

L'au moins une conduite de transport de fumées 14 peut être commune avec la surface, de préférence de la surface totale, de manière plus préférée de la surface totale de la surface extérieure, de l'au moins une cloison 20 de compartimentage entre 5 % et 99 %, de préférence entre 10 % et 90 % de manière préférée entre 15 % et 85 % et de manière plus préférée entre 20 % et 80 %.

En outre, la coque 19, de préférence la surface intérieure de la coque 19, peut être formée au moins en partie par l'au moins une cloison 20 de compartimentage. Pour rappel on entend par coque au moins un bordé de muraille, au moins un bordé de fond, au moins une cloison transversale de double coque, au moins une cloison longitudinale de double coque et/ou au moins une paroi de double fond, et par cloison 20 de compartimentage, on entend au moins une cloison transversale totale, au moins une cloison transversale partielle, au moins une cloison longitudinale totale et/ou au moins une cloison longitudinale partielle De préférence, la surface intérieure de la coque 19, est formée par la surface extérieure de l'au moins une cloison 20 de compartimentage. L'au moins une coque 19 peut être commune avec au moins une cloison 20 de compartimentage sur au moins 0.5 % de la surface, de préférence de la surface totale, et de manière plus préférée de la surface totale de la surface extérieure, de l'au moins une cloison 20 de compartimentage, de préférence au moins 1.0 % de la surface de l'au moins une cloison 20 de compartimentage, de manière plus préférée au moins 1.5 % de la surface de l'au moins une cloison 20 de compartimentage et de manière encore plus préférée au moins 2.0% de la surface de l'au moins une cloison 20 de compartimentage.

L'au moins une coque 19 peut être commune avec l'au moins une cloison 20 de compartimentage sur au plus 10.0 % de la surface, de préférence de la surface totale, et de manière plus préférée de la surface totale de la surface extérieure, de l'au moins une cloison 20 de compartimentage, de préférence au plus 8.0 % de la surface de l'au moins une cloison 20 de compartimentage, de manière plus préférée au plus 6.0 % de la surface de l'au moins une cloison 20 de compartimentage et de manière encore plus préférée au plus 5.0 % de la surface de l'au moins une cloison 20 de compartimentage.

L'au moins une coque 19 peut être commune avec la surface, de préférence de la surface totale, et de manière préférée de la surface totale de la surface extérieure, de l'au moins une cloison 20 de compartimentage entre 0.5 % et 10.0 %, de préférence entre 1.0 % et 8.0 % de manière préférée entre 1.5 % et 6.0 % et de manière plus préférée entre 2.0 % et 5.0 % de la surface de l'au moins une cloison 20 de compartimentage.

De manière particulièrement avantageuse, le volume interne d'au moins un des modules peut être au moins en partie formé par la coque 19 tel qu'illustré sur les figures 1 à 4. De préférence, le volume interne d'au moins un des modules peut être au moins en partie formé par la surface intérieure de la coque 19. Le volume interne d'au moins un des modules peut être commun avec au moins la coque 19 sur au moins 0.5 % de la surface, de préférence de la surface totale, de préférence de la surface totale de la surface intérieure de la coque 19, de préférence au moins 1 % de la surface de la coque 19 de manière plus préférée au moins 5 % de la surface de la coque 19 et de manière encore plus préférée au moins 10 % de la surface de la coque 19. De préférence de l'au moins un module d'absorption 12, de manière plus préférée du module d'absorption 12 et du module de régénération de solvant 13 de manière encore plus préférée du module d'absorption 12 et du module de régénération de solvant 13 et du module de refroidissement 11, et de manière vraiment plus préférée du module d'absorption 12 et du module de régénération de solvant 13, du module de refroidissement 11 et du module (i.e. capacité) de stockage de solvant 22 et/ou du module de lavage 16.

Le volume interne d'au moins un des modules peut être commun avec la coque 19 sur au plus 99 % de la surface, de préférence de la surface totale, de manière préférée de la surface totale de la surface intérieure de la coque 19, de préférence au plus 90 % de la surface de la coque 19 de manière plus préférée au plus 85 % de la surface de la coque 19 et de manière encore plus préférée au plus 80% de la surface de la coque 19.

Le volume interne d'au moins un des modules peut être commun avec la surface, de préférence de la surface totale, de manière préférée de la surface totale de la surface intérieure de la coque 19 entre 0.5 % et 99 %, de préférence entre 1 % et 90 % de manière préférée entre 5 % et 85 % et de manière plus préférée entre 10 % et 80 %.

Dans un mode de réalisation particulier, le volume interne de chaque module peut être au moins en partie formé par la coque 19. De préférence, le volume interne de chaque module peut être au moins en partie formé par la surface intérieure de la coque 19. Le volume interne de chaque module peut être commun avec la coque 19 sur au moins 0.5 % de la surface, de préférence de la surface totale, de manière préférée de la surface totale de la surface intérieure de la coque 19, de préférence au moins 1 % de la surface de la coque 19 de manière plus préférée au moins 5 % de la surface de la coque 19 et de manière encore plus préférée au moins 10% de la surface de la coque 19.

Le volume interne de chaque module peut être commun avec la coque 19 sur au plus 99 % de la surface, de préférence de la surface totale, de manière préférée de la surface totale de la surface intérieure de la coque 19, de préférence au plus 90 % de la surface de la coque 19 de manière plus préférée au plus 85 % de la surface de la coque 19 et de manière encore plus préférée au plus 80% de la surface de la coque 19.

Le volume interne de chaque module peut être commun avec la surface, de préférence de la surface totale, de manière plus préférée de la surface totale de la surface intérieure de la coque 19 entre 0.5 % et 99 %, de préférence entre 1 % et 90 % de manière préférée entre 5 % et 85 % et de manière plus préférée entre 10 % et 80 %.

Par ailleurs, le volume interne d'au moins un des modules peut être au moins en partie formé par l'au moins une cloison 20 de compartimentage. De préférence, le volume interne d'au moins un des modules peut être au moins en partie formé par la surface extérieure de l'au moins une cloison 20. Le volume interne d'au moins un des modules peut être commun avec l'au moins une cloison 20 de compartimentage sur au moins 5 % de la surface, de préférence de la surface totale, de manière préférée de la surface totale de la surface extérieure, de l'au moins une cloison 20 de compartimentage, de préférence au moins 10 % de la surface de l'au moins une cloison 20 de compartimentage de manière plus préférée au moins 15 % de la surface de l'au moins une cloison 20 de compartimentage et de manière encore plus préférée au moins 20 % de la surface de l'au moins une cloison 20 de compartimentage, de préférence de l'au moins un module d'absorption 12, de manière plus préférée du module d'absorption 12 et du module de régénération de solvant 13 de manière encore plus préférée du module d'absorption 12 et du module de régénération de solvant 13 et du module de refroidissement 11, et de manière particulièrement plus préférée du module d'absorption 12 et du module de régénération de solvant 13, du module de refroidissement 11 et du module de stockage de solvant 22 et/ou du module de lavage 16.

Le volume interne d'au moins un des modules peut être commun avec l'au moins une cloison 20 de compartimentage sur au plus 99 % de la surface, de préférence de la surface totale, de manière préférée de la surface totale de la surface extérieure, de l'au moins une cloison 20 de compartimentage, de préférence au plus 90 % de la surface de l'au moins une cloison 20 de compartimentage de manière plus préférée au plus 85 % de la surface de l'au moins une cloison 20 de compartimentage et de manière encore plus préférée au plus 80% de la surface de l'au moins une cloison 20 de compartimentage.

Le volume interne d'au moins un des modules peut être commun avec la surface, de préférence de la surface totale, de manière préférée de la surface totale de la surface extérieure, de l'au moins une cloison 20 de compartimentage entre 5 % et 99 %, de préférence entre 10 % et 90 % de manière préférée entre 15 % et 85 % et de manière plus préférée entre 20 % et 80 %.

Dans un mode de réalisation particulier, le volume interne de chaque module peut être au moins en partie formé (i.e. délimité) par l'au moins une cloison 20 de compartimentage. De préférence, le volume interne de chaque module peut être au moins en partie formé par la surface extérieure de l'au moins une cloison 20 de compartimentage. Le volume interne de chaque module peut être commun avec l'au moins une cloison 20 de compartimentage sur au moins 5 % de la surface, de préférence de la surface totale, de manière préférée de la surface totale de la surface extérieure, de l'au moins une cloison 20 de compartimentage, de préférence au moins 10 % de la surface de l'au moins une cloison 20 de compartimentage de manière plus préférée au moins 15 % de la surface de l'au moins une cloison 20 de compartimentage et de manière encore plus préférée au moins 20% de la surface l'au moins une cloison 20 de compartimentage.

Le volume interne de chaque module peut être commun avec l'au moins une cloison 20 de compartimentage sur au plus 99 % de la surface, de préférence de la surface totale, de manière préférée de la surface totale de la surface extérieure, de l'au moins une cloison 20 de compartimentage, de préférence au plus 90 % de la surface de l'au moins une cloison 20 de compartimentage de manière plus préférée au plus 85 % de la surface de l'au moins une cloison 20 de compartimentage et de manière encore plus préférée au plus 80% de la surface de l'au moins une cloison 20 de compartimentage.

Le volume interne de chaque module peut être commun avec la surface, de préférence de la surface totale, de manière préférée de la surface totale de la surface extérieure, de l'au moins une cloison 20 de compartimentage entre 5 % et 99 %, de préférence entre 10 % et 90 % de manière préférée entre 15 % et 85 % et de manière plus préférée entre 20 % et 80 %.

De plus, le volume interne d'au moins un des modules peut être au moins en partie formé par l'au moins une conduite de transport de fumées 14. De préférence, le volume interne d'au moins un des modules peut être au moins en partie formé par la surface extérieure de l'au moins une conduite de transport de fumées 14. Le volume interne d'au moins un des modules peut être commun avec l'au moins une conduite de transport de fumées 14 sur au moins 5 % de la surface, de préférence de la surface totale, de manière préférée de la surface totale de la surface extérieure, de l'au moins une conduite de transport de fumées 14, de préférence au moins 10 % de la surface de l'au moins une conduite de transport de fumées 14 de manière plus préférée au moins 15 % de la surface de l'au moins une conduite de transport de fumées 14 et de manière encore plus préférée au moins 20 % de la surface de l'au moins une conduite de transport de fumées 14. De préférence de l'au moins un module d'absorption 12, de manière plus préférée du module d'absorption 12 et du module de régénération de solvant 13 de manière encore plus préférée du module d'absorption 12 et du module de régénération de solvant 13 et du module de refroidissement 11, et de manière vraiment plus préférée du module d'absorption 12 et du module de régénération de solvant 13, du module de refroidissement 11 et du module de stockage de solvant 22 et/ou du module de lavage 16.

Le volume interne d'au moins un des modules peut être commun avec l'au moins une conduite de transport de fumées 14 sur au plus 99 % de la surface, de préférence de la surface totale, de manière préférée de la surface totale de la surface extérieure, de l'au moins une conduite de transport de fumées 14, de préférence au plus 90 % de la surface de l'au moins une conduite de transport de fumées 14 de manière plus préférée au plus 85 % de la surface de l'au moins une conduite de transport de fumées 14 et de manière encore plus préférée au plus 80% de la surface de l'au moins une conduite de transport de fumées 14.

Le volume interne d'au moins un des modules peut être commun avec la surface, de préférence de la surface totale, de manière préférée de la surface totale de la surface extérieure, de l'au moins une conduite de transport de fumées 14 entre 5 % et 99 %, de préférence entre 10 % et 90 % de manière préférée entre 15 % et 85 % et de manière plus préférée entre 20 % et 80 %.

Dans un mode de réalisation particulier, le volume interne de chaque module peut être au moins en partie formé par l'au moins une conduite de transport de fumées 14. De préférence, le volume interne de chaque module peut être au moins en partie formé par la surface extérieure de l'au moins une conduite de transport de fumées 14. Le volume interne de chaque module peut être commun avec l'au moins une conduite de transport de fumées 14 sur au moins 5 % de la surface, de préférence de la surface totale, de manière préférée de la surface totale de la surface extérieure, de l'au moins une conduite de transport de fumées, de préférence au moins 10 % de la surface de l'au moins une conduite de transport de fumées 14 de manière plus préférée au moins 15 % de la surface de l'au moins une conduite de transport de fumées 14 et de manière encore plus préférée au moins 20% de la surface l'au moins une conduite de transport de fumées 14.

Le volume interne de chaque module peut être commun avec l'au moins une conduite de transport de fumées 14 sur au plus 99 % de la surface, de préférence de la surface totale, de préférence de la surface totale de la surface extérieure, de l'au moins une conduite de transport de fumées 14, de préférence au plus 90 % de la surface de l'au moins une conduite de transport de fumées 14 de manière plus préférée au plus 85 % de la surface de l'au moins une conduite de transport de fumées 14 et de manière encore plus préférée au plus 80% de la surface de l'au moins une conduite de transport de fumées 14.

Le volume interne de chaque module peut être commun avec la surface, de préférence de la surface totale, de manière préférée de la surface extérieure, de l'au moins une conduite de transport de fumées 14 entre 5 % et 99 %, de préférence entre 10 % et 90 % de manière préférée entre 15 % et 85 % et de manière plus préférée entre 20 % et 80 %.

Ainsi le système 10 de captage de CO₂ utilise la structure marine 15 et permet d'y intégrer tout ou partie des modules du système 10 de captage de CO₂. Le système 10 de captage de CO₂ selon l'invention permet à l'au moins une cloison 20 de compartimentage, à au moins un des modules, de préférence à chaque module et/ou à l'au moins une conduite de transport de fumées 14 d'être intégré(s) dans la structure marine 15. Un tel agencement permet d'améliorer la compacité du système.

En outre, un tel agencement permet d'améliorer les temps de production et de construction et de faciliter le déploiement du système selon l'invention. En effet, le système selon l'invention grâce à cet agencement permet de réduire l'utilisation de nombreux matériaux, de s'affranchir de la construction de structures supplémentaires comprenant une multitude de matériaux couteux, de réduire les longueurs des raccordements via canalisations entre, par exemple, turbines et modules, ou autres équipements. Ceci permet donc de réduire les couts et la durée de mise en œuvre.

En outre, le système 10 de captage de CO₂ selon l'invention permet d'optimiser l'espace disponible dans la coque de préférence dans la structure marine 15 sans affecter son activité ou encore ses paramètres tels que sa flottabilité par exemple.

Le système 10 de captage de CO₂ selon l'invention permet également de minimiser la quantité de matériaux, les travaux nécessaires à la fabrication puis au déploiement et donc le cout global de mise en œuvre d'un tel système 10 de captage de CO₂.

Enfin il est clairement avantageux que le système 10 de captage de CO₂ permet de réduire les émissions de CO₂ développées par l'activité de génération d'électricité et/ou mécanique et/ou thermique des structures marine.

Le système 10 de captage de CO₂ utilise donc directement la structure marine pour le cloisonnement et/ou le compartimentage des différents modules, conduite(s) et cloison(s).

Ceci permet également de moduler le volume interne de chaque module, ce qui permet d'optimiser d'autant plus l'espace de la structure marine 15.

Par exemple, dans un mode de réalisation particulier de l'invention, le module d'absorption 12 peut être formé par (i.e. peut comprendre) au moins une colonne, au moins deux colonnes chacune partageant au moins une partie en commun avec une surface de la coque 19, de préférence de la surface intérieure de la coque 19. Il est à noter qu'une colonne peut être horizontale ou verticale.

Dans un mode de réalisation particulier de l'invention, le module d'absorption 12 peut être agencé pour permettre une absorption de type contre-courant (« counter current flow » en terminologie anglosaxonne), de préférence dans le cas de structure marine de type « barge » et/ou « gravitaire ».

Le module d'absorption 12 peut également être agencé pour permettre une absorption de type flux croisé (« cross flow » en terminologie anglosaxonne) de préférence, dans le cas de structure marine de type « barge ».

De façon avantageuse, l'utilisation de l'absorption à flux croisé permet de limiter l'effet des contraintes de mouvement et/ou d'inclinaison (« motion » et/ou « tilting » en terme anglo-saxon) dus par exemple à la houle sur la structure flottante et pouvant impacter la performance d'absorption chimique du CO₂ par un solvant. En effet, le mouvement de la structure marine peut perturber l'homogénéité de la distribution du solvant par un ou plusieurs distributeurs, d'autant plus que la hauteur du module d'absorption à contre-courant est importante et que le nombre de distributeurs de solvant est faible ce qui réduit la performance du système captage de CO₂. Aussi, grâce à un module d'absorption à flux croisé le phénomène décrit ci-dessus est réduit ce qui permet de préserver la performance du système de captage de CO₂ malgré les mouvements subis. Un tel agencement est donc particulièrement avantageux dans un système selon l'invention.

Dans un mode de réalisation particulier mais non limitatif du mode de réalisation à flux croisé, le système de captage de CO₂ peut comprendre au moins un module d'absorption comprenant au moins un volume interne d'absorption, et au moins un module de lavage 16 comprenant au moins un volume interne de lavage ou encore au moins un volume interne du module d'absorption12 et au moins un volume interne du module de lavage 16 au sein d'un même module d'absorption 12.

Par ailleurs, le ou les module(s) d'absorption 12 peuvent comporter au moins un étage d'absorption ou une pluralité d'étages d'absorption. Chaque étage pouvant être délimité par des cloisons partielles. Ces cloisons permettent d'optimiser la distribution des fluides et la récupération de solvant de manière à réduire le débit de solvant nécessaire.

Par ailleurs, le ou les module(s) de lavage 16 peuvent comporter au moins un étage de lavage ou une pluralité d'étages de lavage de manière à réduire les entrainements et/ou pertes de solvant. Chaque étage pouvant être délimité par des cloisons partielles.

Dans un mode de réalisation particulier où la structure marine correspond à une GBS, la hauteur de la coque peut permettre d'intégrer verticalement d'un seul bloc une colonne d'absorption et de lavage à contre-courant sans la fractionner.

L'absorption à flux croisé est particulièrement avantageuse dans le cas d'une hauteur limitée de structure marine. Par exemple, le système 10 de captage de CO₂ selon l'invention permet d'intégrer horizontalement une ou plusieurs colonnes d'absorption et/ou une ou plusieurs colonnes de lavage par flux croisé dans un même module par exemple.

Ainsi, l'utilisation de l'absorption à flux croisé permet de s'affranchir des contraintes de limitation de la hauteur de la coque d'une structure marine flottante par exemple de type barge. Par ailleurs, la technologie à flux croisé permet une opération à faible débit de fumées comparé à un absorbeur à contrecourant nécessitant un débit minimum plus élevé. Enfin, la perte de charge est aussi plus faible au travers d'un absorbeur à flux croisé que dans un absorbeur à contre-courant ce qui permet de minimiser la puissance électrique consommée par le système de captage de CO₂.

Par ailleurs, en plus de pouvoir moduler le volume interne de chaque module, le système 10 de captage de CO₂ selon l'invention peut également être agencé de façon à permettre un flux de fluide horizontal et/ou vertical et/ou radial.

Le système 10 de captage de CO₂ selon l'invention permet donc de minimiser la quantité de matériaux requis pour assurer le captage de CO₂ et donc également de réduire les couts.

Dans un exemple particulier d'un mode de réalisation de l'invention non limitatif comprenant par exemple une barge flottante, le système 10 de captage de CO₂ peut intégrer une unité de génération de puissance électrique disposée en surface de la structure marine flottante et alimentée en gaz combustible par pipeline sous-marin en partie flexible ou par du gaz stocké à l'état liquide dans la coque. L'électricité produite est acheminée vers d'autres installations via un câble sous-marin. Les fumées des turbines à gaz circulent dans la structure marine via au moins une conduite de transport de fumées, de préférence de section polygonale (e.g. rectangulaires) et en béton et/ou en acier. Ces fumées sont par la suite dirigées vers un module de refroidissement 11, un module d'absorption 12 et un module de lavage 16. L'ensemble des conduites et modules constituant le système de captage de CO₂ (ainsi que le stockage de solvant) est ainsi intégré à la structure marine par compartimentage via au moins une cloison de compartimentage, et munie d'un revêtement (e.g. polymère dans le cas d'une structure en béton).

Un autre exemple particulier d'un mode de réalisation de l'invention non limitatif peut comprendre un système de captage de CO₂ comprenant une structure marine gravitaire. Une structure gravitaire permet la récupération et le captage du CO₂ de fumées en provenance d'une installation existante (e.g. plateforme sur laquelle est installée une unité de génération de puissance électrique). La structure étant fixe, elle peut être raccordée à l'installation existante par un pont sur lequel cheminent les canalisations et les câbles électriques. L'intégration du système de captage de CO₂ dans la structure est réalisée de manière verticale dans ce cas. En outre le système de captage de CO₂ selon l'invention permet de réduire la longueur des conduites et des canalisations et la complexité d'installation et donc de participer à la réduction des couts et du nombre de matériaux nécessaire.

La coque 19, ainsi que l'au moins une cloison 20 de compartimentage permettent de compartimenter le système 10 de captage de CO₂, mais également d'assurer les rôles de canalisation, de conduite de fumées et de modules nécessaires au captage du CO₂ et donc permettent d'autant de réduire les émissions de CO₂ et les couts.

Selon un second aspect, l'invention concerne l'utilisation d'un système 10 de captage de CO₂ selon l'invention dans la production d'électricité, dans la production de vapeur, dans le traitement du CO₂, dans le conditionnement du CO2, dans le transport du CO₂, dans le stockage du CO₂, dans la récupération de fumées d'échappement, dans le traitement de fumées d'échappement, dans la production de gaz, dans la production de pétrole et/ou dans le transport maritime. En effet, un système de captage de CO₂ selon l'invention peut être intégré à n'importe quelle activité et donc permettre le captage de CO₂ afin de réduire les émissions de CO₂. Par traitement du CO2 il peut par exemple s'agir de déshydratation, de désoxygénation, de purification, de compression, de liquéfaction et/ou de pompage.

## Revendications

1. Système (10) de captage de CO₂ à partir de fumées comportant au moins un module de refroidissement (11), au moins un module d'absorption (12), et au moins un module de régénération de solvant (13), chacun desdits modules étant agencé de façon à définir un volume interne ;
le volume interne du module de refroidissement (11) est agencé pour permettre un refroidissement de fumées comportant du CO₂ avec un fluide;
le volume interne du module d'absorption (12) est agencé pour permettre une mise en contact des fumées refroidies avec un solvant pauvre capable d'absorber le CO₂ des fumées pour générer un solvant enrichi ;
le volume interne du module de régénération du solvant (13) est agencé pour permettre le traitement du solvant enrichi de façon à libérer le CO₂ absorbé et former un solvant pauvre ;
ledit système (10) comportant en outre au moins une conduite de transport de fumées (14) agencée pour permettre le transport de fumées vers le module de refroidissement (11), ledit système (10) étant **caractérisé en ce que** :
- il comporte une structure marine (15), ladite structure marine (15) comportant une coque (19) et au moins une cloison (20) de compartimentage,
- le volume interne d'au moins un des modules est au moins en partie défini par la coque (19) et/ou l'au moins une cloison (20) de compartimentage.

2. Système (10) de captage de CO₂ selon la revendication 1, **caractérisé en ce que** l'au moins une conduite de transport de fumée (14) est formée au moins en partie par la coque (19) et/ou l'au moins une cloison (20) de compartimentage.

3. Système (10) de captage de CO₂ selon la revendication 1 ou 2, **caractérisé en ce que** l'au moins une cloison (20) de compartimentage correspond à au moins une cloison transversale, au moins une cloison transversale partielle, au moins une cloison longitudinale et/ou à au moins une cloison longitudinale partielle reliant la coque (19).

4. Système (10) de captage de CO₂ selon l'une des revendications précédentes, **caractérisé en ce que** la coque correspond à une simple coque.

5. Système (10) de captage de CO₂ selon l'une des revendications 1 à 3, **caractérisé en ce que** la coque (19) correspond à une double coque.

6. Système (10) de captage de CO₂ selon l'une des revendications précédentes, **caractérisé en ce que** l'au moins une conduite de transport de fumées (14) est commune avec la coque (19) sur au moins 0.05% de la surface de la coque (19).

7. Système (10) de captage de CO₂ selon l'une des revendications précédentes, **caractérisé en ce que** l'au moins une conduite de transport de fumées (14) est commune avec la coque (19) sur au plus 10% de la surface de la coque (19).

8. Système (10) de captage de CO₂ selon l'une des revendications précédentes, **caractérisé en ce que** le volume interne de chacun des modules est au moins en partie défini par la coque (19).

9. Système (10) de captage de CO₂ selon l'une des revendications précédentes, **caractérisé en ce que** l'au moins une conduite de transport de fumées (14) est commune avec l'au moins une cloison (20) de compartimentage sur au moins 5 % de la surface de l'au moins une cloison (20) de compartimentage.

10. Système (10) de captage de CO₂ selon l'une des revendications précédentes, **caractérisé en ce que** la coque (19) est formée au moins en partie par l'au moins une cloison (20) de compartimentage.

11. Système (10) de captage de CO₂ selon l'une des revendications précédentes, **caractérisé en ce que** le volume interne de chaque module est au moins en partie défini par l'au moins une cloison (20) de compartimentage.

12. Système (10) de captage de CO₂ selon l'une des revendications précédentes, **caractérisé en ce que** le volume interne d'au moins un des modules est au moins en partie défini par l'au moins une conduite de transport de fumées (14).

13. Système (10) de captage de CO₂ selon l'une des revendications précédentes, **caractérisé en ce que** le volume interne de chaque module est au moins en partie défini par l'au moins une conduite de transport de fumées (14).

14. Système (10) de captage de CO₂ selon l'une des revendications précédentes, **caractérisé en ce qu'**il est agencé de façon à permettre un flux de fluide horizontal et/ou vertical et/ou radial.

15. Système (10) de captage de CO₂ selon l'une des revendications précédentes, **caractérisé en ce qu'**il est fixe ou flottant.

16. Utilisation d'un système (10) de captage de CO₂ selon l'une des revendications précédentes dans la production d'électricité, dans la production de vapeur, dans le traitement du CO₂, dans le conditionnement du CO₂, dans le transport du CO₂, dans le stockage du CO₂, dans la récupération de fumées d'échappement, dans le traitement de fumées d'échappement, dans la production de gaz, dans la production de pétrole et/ou dans le transport maritime.

## Patentansprüche

1. System (10) zur Abscheidung von CO₂ aus Rauchgasen, das mindestens ein Kühlmodul (11), mindestens ein Absorptionsmodul (12) und mindestens ein Lösungsmittelregenerierungsmodul (13) umfasst, wobei jedes dieser Module so angeordnet ist, dass es ein Innenvolumen definiert;
das Innenvolumen des Kühlmoduls (11) angeordnet ist, um eine Kühlung von Rauchgasen, die CO₂ umfassen, mit einem Fluid zu ermöglichen;
das Innenvolumen des Absorptionsmoduls (12) angeordnet ist, um ein Inkontaktbringen der gekühlten Rauchgase mit einem schlechten Lösungsmittel zu ermöglichen, das fähig ist, das CO₂ aus den Rauchgasen zu absorbieren, um ein angereichertes Lösungsmittel zu erzeugen;
das Innenvolumen des Lösungsmittelregenerierungsmoduls (13) angeordnet ist, um die Behandlung des angereicherten Lösungsmittels zu ermöglichen, sodass das absorbierte CO₂ freigesetzt und ein schlechtes Lösungsmittel gebildet wird;
wobei das System (10) außerdem mindestens eine Rauchgastransportleitung (14) umfasst, die angeordnet ist, um den Transport von Rauchgasen zum Kühlmodul (11) zu ermöglichen, wobei das System (10) **dadurch gekennzeichnet ist, dass**:
- es eine marine Struktur (15) umfasst, wobei die marine Struktur (15) einen Rumpf (19) und mindestens ein Schott (20) zur Bildung von Abteilen umfasst,
- das Innenvolumen mindestens eines der Module mindestens zum Teil durch den Rumpf (19) und/oder das mindestens eine Schott (20) zur Bildung von Abteilen definiert ist.

2. System (10) zur Abscheidung von CO₂ nach Anspruch 1, **dadurch gekennzeichnet, dass** die mindestens eine Rauchgastransportleitung (14) mindestens zum Teil durch den Rumpf (19) und/oder das mindestens eine Schott (20) zur Bildung von Abteilen gebildet ist.

3. System (10) zur Abscheidung von CO₂ nach Anspruch 1 oder 2, **dadurch gekennzeichnet, dass** das mindestens eine Schott (20) zur Bildung von Abteilen mindestens einem Querschott, mindestens einem Teilquerschott, mindestens einem Längsschott und/oder mindestens einem Teillängsschott entspricht, die den Rumpf (19) verbinden.

4. System (10) zur Abscheidung von CO₂ nach einem der vorhergehenden Ansprüche, **dadurch gekennzeichnet, dass** der Rumpf einem einfachen Rumpf entspricht.

5. System (10) zur Abscheidung von CO₂ nach einem der Ansprüche 1 bis 3, **dadurch gekennzeichnet, dass** der Rumpf (19) einem doppelten Rumpf entspricht.

6. System (10) zur Abscheidung von CO₂ nach einem der vorhergehenden Ansprüche, **dadurch gekennzeichnet, dass** die mindestens eine Rauchgastransportleitung (14) mit dem Rumpf (19) über mindestens 0,05% der Oberfläche des Rumpfes (19) gemeinsam ist.

7. System (10) zur Abscheidung von CO₂ nach einem der vorhergehenden Ansprüche, **dadurch gekennzeichnet, dass** die mindestens eine Rauchgastransportleitung (14) mit dem Rumpf (19) über mindestens 10% der Oberfläche des Rumpfes (19) gemeinsam ist.

8. System (10) zur Abscheidung von CO₂ nach einem der vorhergehenden Ansprüche, **dadurch gekennzeichnet, dass** das Innenvolumen jedes der Module mindestens zum Teil durch den Rumpf (19) definiert ist.

9. System (10) zur Abscheidung von CO₂ nach einem der vorhergehenden Ansprüche, **dadurch gekennzeichnet, dass** die mindestens eine Rauchgastransportleitung (14) mit dem mindestens einen Schott (20) zur Bildung von Abteilen über mindestens 5% der Oberfläche des mindestens einen Schotts (20) zur Bildung von Abteilen gemeinsam ist.

10. System (10) zur Abscheidung von CO₂ nach einem der vorhergehenden Ansprüche, **dadurch gekennzeichnet, dass** der Rumpf (19) mindestens zum Teil durch das mindestens eine Schott (20) zur Bildung von Abteilen gebildet ist.

11. System (10) zur Abscheidung von CO₂ nach einem der vorhergehenden Ansprüche, **dadurch gekennzeichnet, dass** das Innenvolumen jedes Moduls mindestens zum Teil durch das mindestens eine Schott (20) zur Bildung von Abteilen definiert ist.

12. System (10) zur Abscheidung von CO₂ nach einem der vorhergehenden Ansprüche, **dadurch gekennzeichnet, dass** das Innenvolumen mindestens eines der Module mindestens zum Teil durch die mindestens eine Rauchgastransportleitung (14) definiert ist.

13. System (10) zur Abscheidung von CO₂ nach einem der vorhergehenden Ansprüche, **dadurch gekennzeichnet, dass** das Innenvolumen jedes Moduls mindestens zum Teil durch die mindestens eine Rauchgastransportleitung (14) definiert ist.

14. System (10) zur Abscheidung von CO₂ nach einem der vorstehenden Ansprüche, **dadurch gekennzeichnet, dass** es so angeordnet ist, dass ein horizontaler und/oder vertikaler und/oder radialer Fluidfluss ermöglicht wird.

15. System (10) zur Abscheidung von CO₂ nach einem der vorstehenden Ansprüche, **dadurch gekennzeichnet, dass** es feststehend oder schwimmend ist.

16. Verwendung eines Systems (10) zur Abscheidung von CO₂ nach einem der vorstehenden Ansprüche bei der Elektrizitätserzeugung, bei der Dampferzeugung, bei der CO₂-Aufbereitung, bei der CO₂-Konditionierung, beim CO₂-Transport, bei der CO₂-Speicherung, bei der Abgasrückgewinnung, bei der Abgasaufbereitung, bei der Gaserzeugung, bei der Erdölförderung und/oder in der Seeschifffahrt.

## Claims

1. A system (10) for CO₂ capture from fumes including at least one cooling module (11), at least one absorption module (12), and at least one solvent regeneration module (13), each of said modules being arranged so as to define an internal volume;
the internal volume of the cooling module (11) is arranged to allow for the cooling of the fumes including CO₂ with a fluid;
the internal volume of the absorption module (12) is arranged to allow the cooled fumes to be brought into contact with a dilute solvent able to absorb the CO₂ from the fumes so as to generate an enriched solvent;
the internal volume of the solvent regeneration module (13) is arranged to allow for the treatment of the enriched solvent so as to liberate the absorbed CO₂ and to form a dilute solvent;
said system (10) further including at least one fumes transport duct (14) arranged to allow for the transport of fumes towards the cooling module (11), said system (10) being **characterized in that**:
- said system includes a marine structure (15), said marine structure (15) including a shell (19) and at least one compartmentalization partition (20),
- the internal volume of at least one of the modules is at least partly defined by the shell (19) and/or at least one compartmentalization partition (20).

2. The system (10) for CO₂ capture according to claim 1, **characterized in that** the at least one fumes transport duct (14) is formed at least partly by the shell (19) and/or at least one compartmentalization partition (20).

3. The system (10) for CO₂ capture according to claim 1 or 2, **characterized in that** the at least one compartmentalization partition (20) corresponds to at least one transverse partition, at least one partial transverse partition, at least one longitudinal partition and/or at least one partial longitudinal partition linking the shell (19).

4. The system (10) for CO₂ capture according to one of the preceding claims, **characterized in that** the shell corresponds to a single shell.

5. The system (10) for CO₂ capture according to one of claims 1 to 3, **characterized in that** the shell (19) corresponds to a double shell.

6. The system (10) for CO₂ capture according to one of the preceding claims, **characterized in that** the at least one fumes transport duct (14) is common with the shell (19) over at least 0.05% of the surface area of the shell (19).

7. The system (10) for CO₂ capture according one of the preceding claims, **characterized in that** the at least one fumes transport duct (14) is common with the shell (19) over at most 10% of the surface area of the shell (19).

8. The system (10) for CO₂ capture according to one of the preceding claims, **characterized in that** the internal volume of each of the modules is at least partly defined by the shell (19).

9. The system (10) for CO₂ capture according to one of the preceding claims, **characterized in that** the at least one fumes transport duct (14) is common with at least one compartmentalization partition (20) over at least 5% of the surface area of at least one compartmentalization partition (20).

10. The system (10) for CO₂ capture according to one of the preceding claims, **characterized in that** the shell (19) is at least partly formed by at least one compartmentalization partition (20).

11. The system (10) for CO₂ capture according to one of the preceding claims, **characterized in that** the internal volume of each of the modules is at least partly defined by at least one compartmentalization partition (20).

12. The system (10) for CO₂ capture according to one of the preceding claims, **characterized in that** the internal volume of at least one of the modules is at least partly defined by at least one fumes transport duct (14).

13. The system (10) for CO₂ capture according to one of the preceding claims, **characterized in that** the internal volume of each of the modules is at least partly defined by the at least one fumes transport duct (14).

14. The system (10) for CO₂ capture according to one of the preceding claims, **characterized in that** the system is arranged so as to allow for a horizontal and/or vertical and/or a radial fluid flow.

15. The system (10) for CO₂ capture according to one of the preceding claims, **characterized in that** the system is fixed or floating.

16. A use of a system (10) for CO₂ capture according to one of the preceding claims in the production of electricity, in the production of steam, in the treatment of CO₂, in the packaging of CO₂, in the transport of CO₂, in the storage of CO₂, in the recovery of exhaust fumes, in the treatment of exhaust fumes, in the production of gas, in the production of oil and/or in maritime transport.
